(19)

**Europäisches Patentamt**
**European Patent Office**
**Office européen des brevets**

(11)     **EP 1 733 300 B1**

(12)                          **EUROPEAN PATENT SPECIFICATION**

(45) Date of publication and mention
of the grant of the patent:
**30.06.2010 Bulletin 2010/26**

(51) Int Cl.:
***G06F 7/00*** *(2006.01)*          ***G06F 15/80*** *(2006.01)*

(21) Application number: **05717960.8**

(86) International application number:
**PCT/GB2005/000895**

(22) Date of filing: **09.03.2005**

(87) International publication number:
**WO 2005/088640 (22.09.2005 Gazette 2005/38)**

(54) **IMPROVEMENTS RELATING TO ORTHOGONAL DATA MEMORY**

VERBESSERUNGEN IM BEZUG AUF ORTHOGONAL-DATENSPEICHER

AMELIORATIONS APPORTEES A UNE MEMOIRE DE DONNEES ORTHOGONALES

(84) Designated Contracting States:
**AT BE BG CH CY CZ DE DK EE ES FI FR GB GR
HU IE IS IT LI LT LU MC NL PL PT RO SE SI SK TR**

(30) Priority: **09.03.2004 GB 0405283**

(43) Date of publication of application:
**20.12.2006 Bulletin 2006/51**

(73) Proprietor: **Aspex Semiconductor Limited
High Wycombe
Buckinghamshire HP 11 2EE (GB)**

(72) Inventors:
• **Jalowiecki, Ian,**
**c/o Aspex Semiconductor Limited
Bradford, BD16 1PF (GB)**

• **Whitaker, Martin,**
**c/o Aspex Semiconductor Limited
Bradford, BD16 1PF (GB)**
• **Boughton, Donald,**
**c/o Aspex Semiconductor Limited
Bradford, BD16 1PF (GB)**

(74) Representative: **Ahmad, Sheikh Shakeel
Keltie
Fleet Place House
2 Fleet Place
London EC4M 7ET (GB)**

(56) References cited:
**EP-A- 0 424 618          GB-A- 2 160 685
US-A- 4 970 679          US-A1- 2002 032 710**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

Technical Field

The present invention concerns improvements relating to orthogonal data memory. It relates particularly to a multi-ported orthogonal data memory for effecting a corner-turning function, where for example data input as a sequence of bit-parallel word-serial data transfers are converted to data output in a bit-serial word-parallel fashion.

Background Art

The high performance required for real-time processing in communications and multimedia applications stresses processor architectures in many different ways, and the single instruction multiple data (SIMD) parallel-processing model is considered the most acceptable way to deliver the high performance needed for both today's and future applications. The SIMD model assumes a number of processing elements, each executing exactly the same sequence of instructions on their local data. The key advantages of the SIMD model are: a reduction in the overall hardware complexity; design regularity is maximised; computing resources are enhanced; and the software development is greatly simplified. All of these advantages come from the fact that only a single instruction decode and dispatch unit is required, leaving the majority of transistors in the design to be used for useful computation.

A particular sub-class of SIMD data-parallel processors is known as associative processors. Such processors utilise a class of memory known as *associative* or *content-addressable* memory (CAM). As the name implies, this type of memory does not operate by addressing the memory location in the conventional sense, but rather it compares the stored contents of a pre-defined field (or set of bits) of all memory words with a global bit pattern (comprising one or more bits). Those memory words that *match* the applied pattern during the operation (which is variously known as *searching, matching* or *tagging)* are marked (or *tagged*) in some way so that they might subsequently participate in a later operation which will, in some manner, modify the stored contents of the memory. The internal organisation of such memories generally fall into one of two classifications: 1) word organised (i.e. memories whereby a bit-parallel pattern may be used as the basis of the search) and the bit-parallel comparison is carried out in a single indivisible operation; and 2) bit-serial (i.e. only a single bit may be used as the basis of the search). In the latter class of associative memories, bit-parallel searches may be emulated by a repeated application of bit-serial searches. A content addressable memory for use with a SIMD associative data-parallel computer is described in the Applicant's co-pending published International application no. WO 02/043068 A.

A typical SIMD parallel processor architecture comprises a large capacity external memory, known as the Secondary Data Store (SDS), and a Primary Data Store (PDS) which may be considered to be the local data store of the processor. If the SIMD processor is bit-serial in nature, then the typical organisation of the PDS is a single word of PDS memory per SIMD processing element. SIMD parallel processors are particularly useful for operations on data arrays, such as image or signal processing. The PDS may perform a corner-turning function so as to enable the data array to be transposed so that it is suitable for processing by the SIMD parallel processor.

Known methods and apparatus for performing corner-turning are generally inefficient because they typically involve masking all off all but the byte to be transferred, transferring the data byte into the correct location of the corner-turning memory and thereafter repeating the masking and transferring steps until each of the different bytes have been loaded into the memory. For the transfer of the 16 bytes of a 128-bit word, this would involve 32 operations to effect corner turning. Thus the transfer of data between the corner-turning data memory and the SIMD parallel processor is slower than desired.

Alternatively, if only one size of data element is to be handled, the elements can be transferred to a simple shift register and predetermined hard-coded connections to the different processor locations can be utilised to effect the corner turning. Whilst this does provide a fast efficient way of effecting a corner-turning function, it is impractical because such memory architectures are unable to deal with data words which have a different size of data elements. data re-organisation apparatus is described. The apparatus comprises a double buffer arrangement in which data is written into each buffer by rows and read out by columns.

The inputs and outputs of the buffers are time-division multiplexed, which reduces the required width of each buffer by the product of the input and output multiplexing factors.

An object of the present invention is to overcome or at least substantially reduce at least some of the aforedescribed disadvantages and in particular to provide a more efficient and faster way of effecting the corner turning function.

Summary of the Invention

According to one aspect of the present invention there is provided, a multi-ported orthogonal data memory for effecting a corner-turning function as claimed in claim 1.

This present aspect of the present invention provides an efficient solution to the corner turning problem. By having predetermined knowledge of how the data should be loaded into the memory efficient corner turning and readout is possible. The structure of the memory according to the present invention enables all of the redundant memory cells in a corner-turning function to be effectively ignored. In a memory arranged to handle 64-bit words, the corner turning function for say 8-bit data items can have an inherent 87.5% redundancy (488 [56x8] of the 512 [64x8] required memory locations do not store valid data) and so the efficiency of the present invention is readily apparent.

Whilst it is theoretically possible to have individual enables (strobes) for each and every memory cell such that the specific memory cells which need to be enabled to get data into and out of the multi-ported orthogonal memory can be specified efficiently, it is quite impractical to do this in view of the number of additional connections (strobe lines) which would be required. For a 64-bit orthogonal memory where conventionally eight row strobe lines would be provided, this would have to be increased to 512 (64 bits x 8) row strobe lines.

Grouping together specific memory cells as required by the present invention facilitates the number of enable connections (strobes lines) to the memory to be kept to a manageable minimum whilst still improving the efficiency of the corner turning function.

For example, if four groups were provided then an additional 24 strobe lines would be required which is acceptable for implementation. Further, with knowledge of which locations will be required to be enabled to effect the corner-turning function, selection of the groups can be effected to maximise the efficiency of the transfer.

Preferably, the multi-ported orthogonal memory is arranged to handle different types of data words each having a different size of data items provided. For example, a 128-bit data word can have one 128-bit data item, two 64-bit data items, four 32-bit data items, eight 16-bit data items, or 32 8-bit data items. In this case, the enabling means is advantageously provided with selection means for selecting the current size of the data items in the data word and configuring the enabling means to operate with the selected current size of data items. This further adds to the efficiency of the memory as it is able to handle different sizes of data efficiently.

The best balance between maximum efficiency and minimum number of required additional strobe connections can be achieved if preferably the number of different groups of memory cells is made equal to the number of different sizes of data items which the memory is able to handle.

As stated previously, the particular group to be selected for the data transfer is determined upon the size of the data item being transferred. This is because the size of the data item being transferred determines the pattern of usage of memory cells to effect the corner turning function. More specifically, a group is selected upon logic conditions becoming true, namely logic condition based on the current selected row(s) of the matrix as well as the size of the data items being transferred. Therefore, for each of the enabled rows of the matrix only the specific memory cells belonging to the column locations defined by the selected group are enabled to effect data transfer.

Preferably, the enabling means comprises a pointer in a shift register for determining which rows of the matrix are to be enabled for talking part in the data transfer of all of the data items of the data word. This is a very elegant and efficient way of assisting in row selection for the data transfer which is adaptable such that it can be used to handle transfers of different data item sizes efficiently. More specifically, the pointer in the shift register can be configured to be operable in a plurality of different modes, each mode corresponding to a possible size of the data item being transferred, the pointer being configured within a single instruction to advance by a predetermined number of bit positions thereby indicating which rows of the matrix are to be enabled to facilitate transfer of the whole of the data word to or from the matrix. In this regard, the memory may also comprise a hard-wired backward propagation network for determining from the bit position of the pointer and the size of the current data items, the rows of the matrix that are to be enabled for the data transfer. In an embodiment of the present invention, the network comprises a plurality of data item size selected multiplexers to which are input the current bit position of the pointer in the shift register and which outputs the selected active rows of the matrix for the current data transfer.

Preferably the memory further comprises means for storing information relating to a faulty row in the matrix and the shifting word pointer register is arranged to be controlled to skip the faulty row in the matrix and instead point to otherwise redundant additional row of the matrix. Clearly, the advantage of this feature is tolerance of faults which may occur in the manufacturing process for the memory array (matrix). The memory typically has these redundant additional rows which are provided for use if another row cannot be used. The use of the shifting word pointer enables a relatively easy way of solving the problem of a fault row.

The multi-ported memory will have at least two ports, one of which will be a word port for effecting word-serial bit-parallel data transfers (secondary data transfers) and a bit-port for effecting bit-serial word-parallel data transfers (primary data transfers).

In order to effect secondary data transfers, the enabling means comprises byte column determining means for enabling a specific group of byte column locations of the matrix within a selected word row to be enabled for transferring an item of the data word across a word port of the memory. In this way, the memory cells of a given row of the matrix specified by the selected group for a data item are enabled for the data transfer. Each different row can have a different set of column locations specified as the group is defined across multiple rows and columns of the matrix.

The byte column determining means comprises a table specifying the relationship between the plurality of different groups of memory cells and their respective memory cell locations in the matrix. This table represents the group definitions which are ultimately determined in sets of enable connections made to different memory cells.

In order to effect primary data transfers, the enabling means comprises bit-column determining means for enabling a specific group of bit-column locations of the matrix within a selected word row to be enabled for transferring a bit of an item of the data word across a bit port of the memory. In this way, the memory cells of a given column of the matrix specified by the selected group for one or more data items are enabled for the data transfer. It is to be appreciated that for primary data transfers, there is no need to determine how many columns are to take part in the transfer, but rather all of them are included. The row selection can take part as in the secondary data transfer. However, if all of the rows are enabled, this can advantageously often result in bit-serial data transfers of multiple data words across the bit-port of the memory which maximises efficiency.

The bit column determining means comprises a table specifying the relationship between the plurality of different groups of memory cells and their respective memory cell locations in the matrix. This table represents the group definitions which are ultimately determined in sets of enable connections made to different memory cells.

Preferably the data corner-turning function is effected between a plurality of SIMD associative processors and a location addressable data store, the memory being arranged to transfer the data words comprising a plurality of data items across a word port for the data store and transfer data bits across a bit port for the SIMD associative processors, and the enabling means is arranged to transfer data items via the word port or bit data via the bit port in a single transfer operation.

Brief Description of Drawings

The invention will be described, by way example only, with reference to the accompanying drawings, in which:

Figure 1 is a schematic block diagram showing a SIMD processing architecture including a multi-ported orthogonal data memory (Primary Data Store) for performing corner-turning according to an embodiment of the present invention;

Figure 2 is a schematic block diagram showing in further detail components of the SIMD processing architecture of Figure 1;

Figure 3 is a schematic block diagram showing the internal structure of the multi-ported orthogonal memory of Figure 1;

Figure 4 is a circuit diagram showing an individual orthogonal data memory bit cell;

Figure 5 is a table showing row strobe logic conditions for enabling specific groups of memory bit cells when effecting a secondary data transfer in the memory of Figure 3;

Figure 6 is a schematic view of a circuit diagram for determining row selects for selecting particular rows of the orthogonal data memory from a shift register pointer of the orthogonal data memory of Figure 3;

Figures 7a to 7d are schematic block diagrams illustrating the corner-turning function implemented by the multi-ported orthogonal memory of Figure 3 when carrying out a secondary data transfer for different data modes;

Figure 8 is a table showing row strobe logic conditions for enabling specific groups of memory bit cells when effecting a primary data transfer in the memory of Figure 3; and

Figures 9a to 9d are schematic block diagrams illustrating the corner turning function implemented by the multi-ported orthogonal memory of Figure 3 when carrying out a primary data transfer in different data modes.

Detailed Description of the Preferred Embodiments

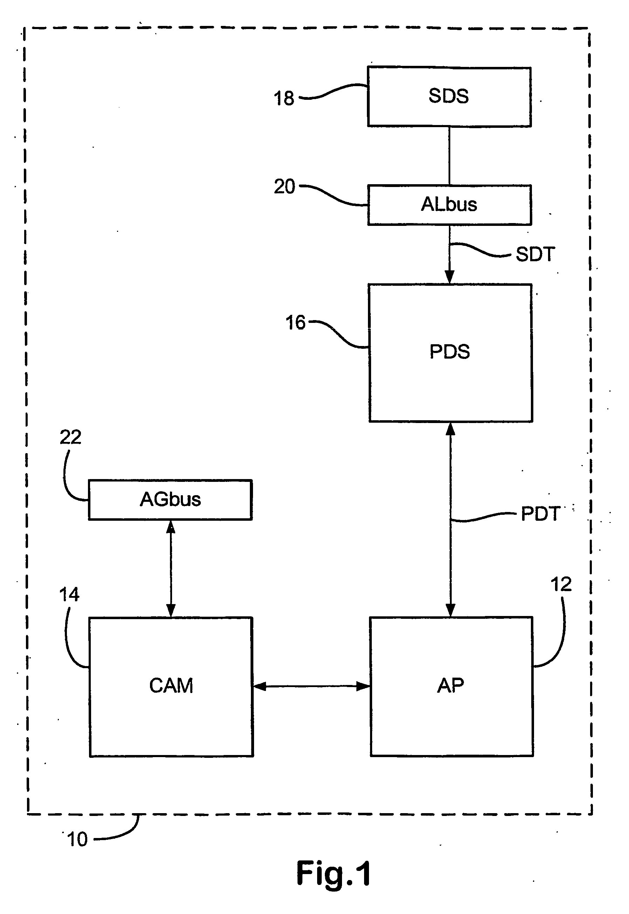

Referring to Figure 1, there is shown an apparatus 10 for implementing presently preferred embodiments of the present invention. The apparatus 10 comprises an Associative Processor array 12 which interfaces with a Content Addressable Memory 14 and a Primary Data Store 16.

The Associative Processor array 12 is a programmable, homogeneous and fault-tolerant SIMD parallel processor incorporating a string of identical processing units (referred to hereinafter as associative processing elements or APEs), a software-programmable intercommunication network, and a vector data buffer for fully-overlapped data I/O (not shown). At the physical level, the Associative Processor 12 is implemented as a bit-serial, word-parallel associative parallel processor in that all the APEs can simultaneously perform the same arithmetic, logical or relational operation in a bit-serial manner. The architecture of the Associative Processor 12 will be described in further detail later.

The Content Addressable Memory 14 is in the form of an array which typically comprises 128 word rows, with each word being 64 bits wide. The Content Addressable Memory may be considered to be the working registers of the Associative Processor array.

The Primary Data Store 16 is an orthogonal-type memory which may be considered to be the local input-output data store of the Associative Processor 12. The Primary Data Store 16 interfaces with a Secondary Data Store 18, such as RAM or other conventional memory sub-system, via a local ALbus 20. The Content Addressable Memory 14 receives or returns data via the AGbus 22. Moreover the Associative Processor 12 also receives instructions from the AGbus 22. These instructions cause the associative processor to implement software programmable operations, including - but not limited to - the transfer of data between the Primary Data Store 16 and the Content Addressable Memory 14.

Data is transferred between the Primary Data Store 16 and the ALbus 20 in a bit-parallel word-serial manner, and this type of data transfer is referred to hereinafter as Secondary Data Transfer (SDT). Data is transferred between the Primary Data Store 16 and the Associative Processor 12 in a bit-serial word-parallel manner, and this type of data transfer is referred to hereinafter as Primary Data Transfer (PDT). Both Primary and Secondary Data Transfers permit the transfer of data in four different modes: D8, D16, D32 and D64, where the D8 mode is the transfer of eight 8-bit data items, the D16 mode is the transfer of four 16-bit data items, the D32 mode is the transfer of two 32-bit data items, and the D64 mode is the transfer of one 64-bit data item.

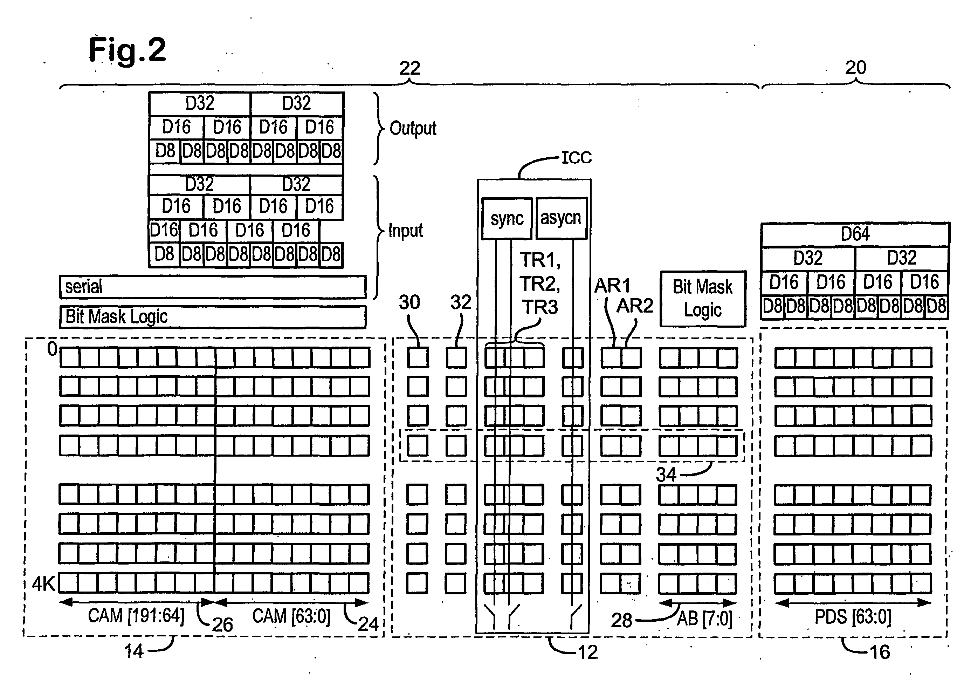

Figure 2 shows the Associative Processor 12, the Content Addressable Memory 14 and the Primary Data Store 16 in further detail.

Referring now to this Figure, it can be seen that the Content Addressable Memory 14 comprises a 64-bit wide data register 24 which is accessible in serial, D16 and D32 modes, and a 128-bit wide auxiliary data register 26 which is accessible in serial mode only. The Associative Processor array 12 comprises an 8-bit wide activity register 28, a plurality of Arithmetic Logic Units 30 and associated Carry Registers 32, three Tag Registers TR1, TR2 and TR3, and first and second Activity Registers AR1 and AR2 for denoting the activation state of each APE 34. Thus, each of the aforementioned APEs 34 consists of a single Activity Register 28, an Arithmetic Logic Unit 30 and associated Carry Register 32, three Tag Registers TR1, TR2 and TR3 and associated Activity Registers AR1 and AR2. Each APE 34 also has associated therewith a single row of the CAM data register 24 and 26 and a single row of the Primary Data Store 16.

The APEs 34 are connected together by a high-speed inter-APE communications channel or ICC. The ICC implements a simple, scalable, fault tolerant and tightly coupled APE interconnection strategy, supporting two modes of inter-processing communication: 1) asynchronous (i.e., bi-directional, single-bit communication to connect processing units sources and corresponding processing units destinations of high-speed activation signals implementing a broadcast network for processing element selection and inter-processing element routing functions); and 2) synchronous - bi-directional, multi-bit communication via a high-speed, bit-serial shift register for data/message transfers between processing unit groups.

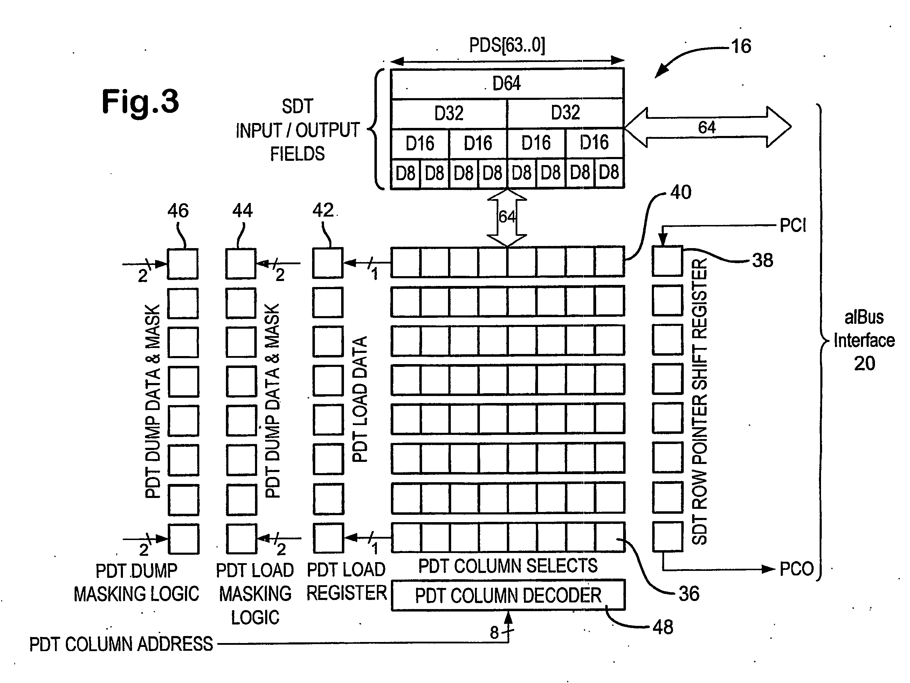

The structure and function of the Primary Data Store 16 will now be described in detail with reference to Figures 3 to 9.

The internal structure of the Primary Data Store 16 is shown in Figure 3. The Primary Data Store 16 comprises a plurality of data memory cells 36 arranged in the form of a memory matrix having a plurality of rows and columns. In this example, the memory matrix comprises eight rows and eight columns, each row comprising a 64-bit data register 40. Thus, each data memory cell 36 comprises eight memory bit cells 50 (described later). The Primary Data Store 16 also includes an 8-bit SDT row pointer shift register 38 for determining a word row location in the memory matrix for a data item being transferred, each bit of the shift register 38 being associated with a particular word row (i.e. data register 40) of the memory matrix. The SDT row pointer shift register 38 is routed via the ALbus 20 to facilitate modularity. The input PCI and output PCO of the SDT row pointer shift register 38 can be chained together to assemble modular IO configurations.

For the transfer of data in Primary Data Transfer mode the Primary Data Store 16 further includes an 8-bit PDT load data register 42, a PDT load data and mask register 44, a PDT dump data and mask register 46 and a PDT column decoder and selector register 48. The PDT load data register 42 is a shift register which is used in the transfer of data between the APEs 34 and the Primary Data Store 16. The PDT load data and mask register 44 is used to remove unwanted data bits when transferring data from the Primary Data Store 16 to the APEs 34, and the PDT dump data and mask is used to remove unwanted data bits when transferring data from the APEs 34 to the Primary Data Store 16.

Each word row of the PDS memory matrix thus comprises a single 64-bit data register 40, a 1-bit SDT row pointer shift register 38, a 1-bit PDT load data register 42, a PDT load data and mask register 44, a PDT dump data and mask register 46.

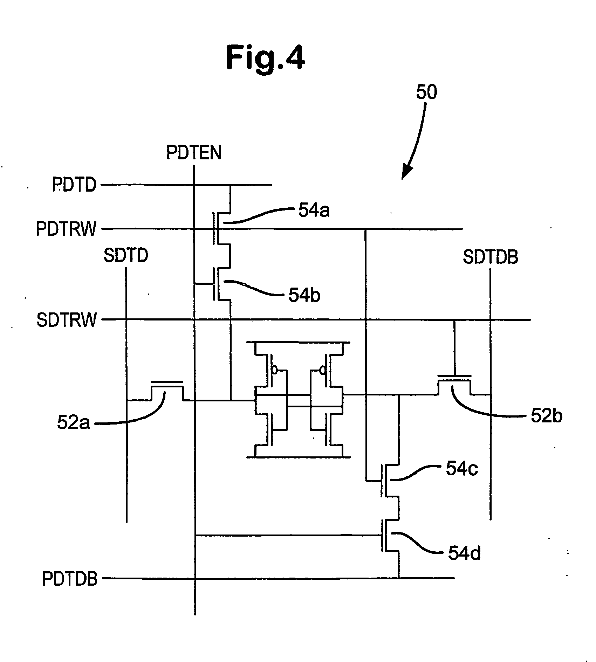

An individual Primary Data Store memory bit cell 50 is shown in Figure 4. As stated above, there are eight such memory bit cells 50 in every Primary Data Store memory cell 36. Each memory bit cell 50 is based on a conventional six-transistor RAM cell. More particularly, each memory bit cell 50 comprises first and second transistors 52a and 52b which provide a path to write secondary data from SDTD (SDT Data) and SDTDB (SDT Data Bar) bit lines to the memory bit cell 50 when a SDTRW (SDT Read Write) line is strobed, and to read secondary data from the memory bit cell 50 onto the SDTD and SDTDB bit lines when the SDTRW line is strobed.

Each memory bit cell 50 further comprises four additional transistors 54a, 54b, 54c and 54d. These transistors permit the writing of primary data from PDTD (PDT Data) and PDTDB (PDT Data Bar) bit lines to the memory bit cell 50 when a PDTRW (PDT Read Write) line is strobed and a PDTEN (PDT Enable) line is activated, and read primary data from the memory bit cell 50 onto the PDTD and PDTDB bit lines when the PDTRW line is strobed and the PDTEN line is activated.

The method by which data is transferred to and from the Primary Data Store 16 is now described. Firstly, secondary data transfer of data will be described, followed by primary data transfer of data.

In order to provide efficient data transfer (both primary and secondary), multiple groups A, B, C and D of Primary Data Store memory cells 36 within the memory matrix are pre-defined, each group of memory cells being defined across multiple rows and columns. These groups A, B, C and D of memory cells 36 are individually addressable via dedicated strobe lines (or connections) which enables data to be read from (or written to) the selected group(s) of memory cells.

Table 1 below illustrates the pattern of connectivity of the strobe lines to the groups A, B, C and D of the PDS memory cells 36 for secondary data transfer, the particular groups of memory cells A, B, C and D being hard-wired to the read/write line SDTRW of the appropriate memory bit cells 50. The strobe connectivity pattern is achieved by defining the same number of different groups of memory cells as the number of different size of data items. For example, in this case four different groups A, B, C and D of memory cells are defined for the 8, 16, 32 and 64-bit data items.

| row address MOD 8 | bit column address | | | | | | | |
|---|---|---|---|---|---|---|---|---|
| | [63..56] | [56..48] | [47..40] | [39..32] | [31..24] | [23..16] | [15..8] | [7..0] |
| 0 | D | D | D | D | C | C | B | A |
| 1 | C | C | C | C | B | B | A | D |
| 2 | D | D | B | B | C | A | C | C |
| 3 | B | B | C | C | A | D | D | D |
| 4 | D | D | D | A | C | C | B | B |
| 5 | C | C | A | C | B | B | D | D |
| 6 | D | A | B | B | C | C | C | C |
| 7 | A | B | C | C | D | D | D | D |

### Table 1

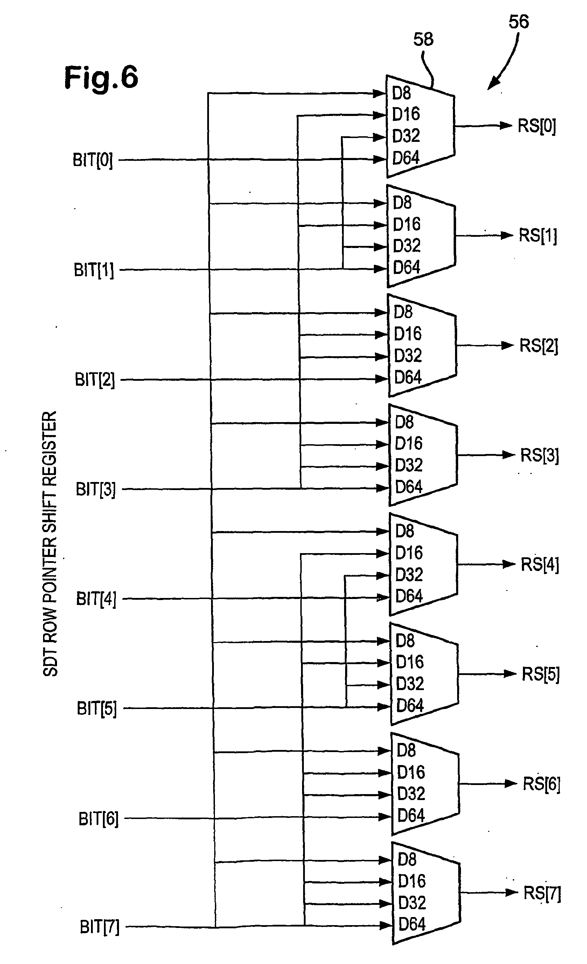

Consider that a 64-bit data word comprising eight 8-bit data items is to be transferred to the Primary Data Store 16. The particular group A, B, C or D of memory cells 36 to be selected for data transfer is determined by the size of the data item being transferred - the actual cells being determined by the wiring of the group enables in the memory matrix and which rows of the memory matrix are selected as being active. The SDT row pointer is configured to advance to the last row (i.e. row 7) of the memory matrix by defining BIT[7] of the SDT row pointer shift register 38 as HIGH and BIT[0] to BIT[6] of the register 38 as LOW. This - in conjunction with the backward propagation network shown in Figure 6 - can now be used to make the group of eight rows active by virtue of a single instruction i.e. RS[0] to RS[7] are TRUE. Now the correct byte columns of the PDS memory matrix have to be selected by generating appropriate strobes in order that the 8-bit data items can be transferred thereto.

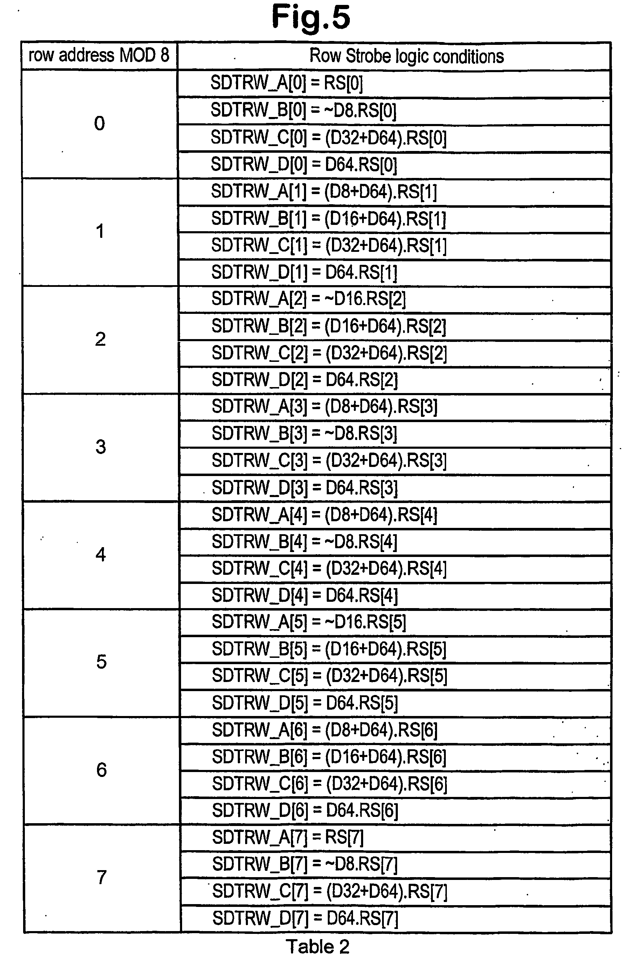

Referring now to Figure 5, there is shown a table comprising four logic conditions for each word row of the PDS memory matrix. To generate the appropriate strobe SDTRW for selecting the correct byte column for the first 8-bit data item, the four logic conditions SDTRW_A[0], SDTRW_B[0], SDTRW_C[0] and SDTRW_D[0] associated with the first row of the PDS memory matrix are evaluated. A group of memory cells is selected depending upon which logic condition is true, namely the logic condition based on the current selected (activated) row(s) (i.e. RS[0]) of the matrix as well as the size of the data items being transferred.

For example, looking at the first logic condition associated with the first row of the matrix, if RS[0] is true, then the strobe SDTRW_A[0] will be generated which will activate the first byte column of the PDS memory matrix. The state of the current selected row RS[n] (where n is the row number) is determined by the network 56 shown in Figure 6, the network comprising eight multiplexers 58. This network 56 further comprises eight inputs which take as their inputs the appropriate bits (i.e. BIT[0] to BIT[7]) of the SDT row pointer shift register 38, and eight outputs (i.e. RS[0] to RS[7]) which give the row select values for use in the logic conditions given in Table 2.

As it is required to make multiple rows of the matrix active for the purpose of writing data in the byte patterns shown in Table 1, it is required effectively to propagate the row pointer from its current location to all of the rows which must become active during the current clock cycle. So, for example, if the pointer is currently pointing to row 3 of the PDS memory matrix (i.e. BIT[3] of the shift register), and the network is currently in D16 mode, then the back propagation network uses the current data size mode and translates the bit position of the shifting word pointer to activate a set of rows associated with this mode, namely rows 0 (RS[0]), 1 (RS[1]), 2 (RS[2]) and 3 (RS[3]) are made active. The actual back propagation network of Figure 6 comprises a predetermined wiring pattern from the shift register and a set of 4 to 1 multiplexers to derive the row select signals.

The shifting word pointer is configured to jump to the appropriate row of the PDS memory matrix until the whole of the data word has been input or output in accordance with the selected current mode of operation. The shift register 38 determines which row of the matrix it needs to be pointing to for the next SDT which will be carried out in the next clock cycle. Thus, in D8 mode the shifting word pointer shifts in steps of eight (i.e. shifting from BIT[7] to BIT [15] to BIT [23] etc) between clock cycles. In D16 mode, the shifting word pointer shifts in steps of four, i.e. shifting from BIT[3] to BIT[7] to BIT[11] etc. In D32 mode the shifting word pointer shifts in steps of two, i.e. shifting from BIT[1] to BIT[3] to BIT [5] etc, and in D64 mode the shifting word point shifts in single steps, i.e. shifting from BIT[0] to BIT[1] to BIT[2] etc.

Returning to the example. As data is currently being transferred in D8 mode into the first eight rows of the PDS memory matrix, the output of the pointer shift register has BIT[7] set to 1 (i.e. true) and all of the other bits (i.e. BIT[0.. 6] set to 0 (i.e. false). Considering the network 56 in Figure 6, the resulting outputs RS[0..7] are 1 (i.e. true) when D8 mode is selected.

Considering, for example, the first row only. Referring to Table 2 of figure 5, the first logic condition SDTRW_ A[0] is true and thus the byte group A of the memory cells 36 in the first column of the first row of the PDS memory matrix will be enabled by strobing the SDTRW line of each of the eight memory bit cells 50 in the first byte column of the PDS memory matrix, and the first 8-bit data item is written thereto. Looking now at the second logic condition, SDTRW_B[0] is true if NOT (D8 AND RS[0]). Here, D8 is true (as we are in D8 mode) and RS[0] is true, therefore SDTRW_B[0] is false, and the group B of memory cells 36 (i.e. those in the second byte column of the PDS memory matrix) will not be enabled and no data is written to this group of memory cells. Moving on to the third logic condition, SDTRW_C[0] is true if (D32 OR D64) AND RS[0] is true. In this case, both D32 and D64 are false (as we are currently in D8 mode), and RS [0] is true, therefore SDTRW_C[0] is false and so the group C of memory cells 36 (i.e. those in the third and fourth columns of the PDS memory matrix) will not be enabled and no data is written to this group of memory cells. Turning now to the last logic condition for the first row, SDTRW_D[0] is true if D64 AND RS[0] are true. As D64 is false, SDTRW_ D[0] is false, and so the group of memory cells D (i.e. those in the fifth to the eighth column of the PDS memory matrix) will not be enabled and no data is written to this group of memory cells.

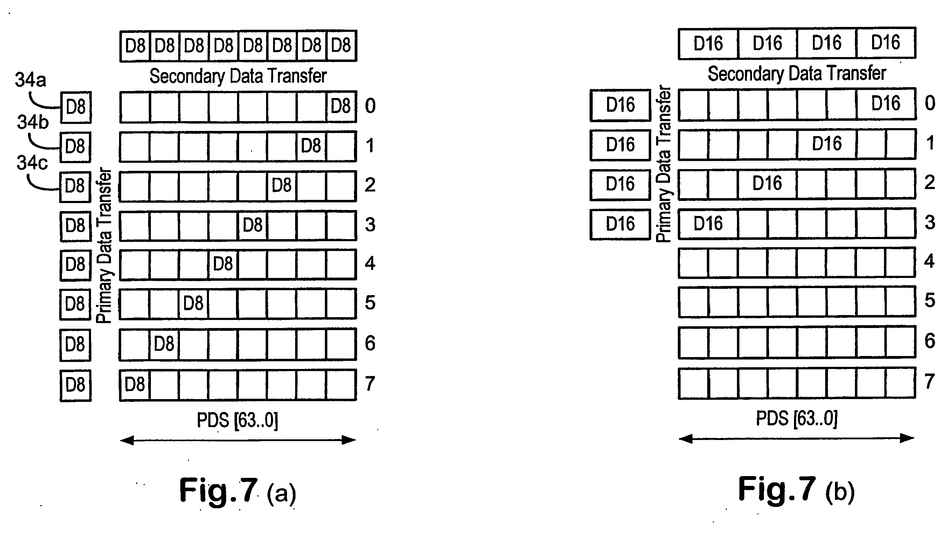

The logic conditions in Table 2 are evaluated for the remaining seven rows of the PDS memory matrix allowing all of the 8-bit data items in the 64-bit SDT word to be written to the appropriate groups of memory cells 36. In this case, the 8-bit items are all written to group A along the diagonal of the PDS memory matrix. This is illustrated by Figure 7a which shows a single row of eight 8-bit data items transferred via secondary data transfer into the PDS memory matrix. The pattern of connectivity in the table is repeated every eight word rows so that the logic conditions are repeated every eight rows for data transfer in the D8 mode.

Now, consider that the data transfer is being made in D16 mode. That is, four 16-bit data items are to be transferred to the Primary Data Store 16 in a single clock cycle. D16 is now true and D8, D32 and D64 are false. The SDT row pointer shift register 38 is initially configured to advance to the third row of the memory matrix by defining BIT [3] as HIGH and all other bits as LOW. The back propagation network in Figure 6 will now ensure that the four rows in the currently active row group (e.g. RS[0] to RS[3]) will be active in parallel. Now the correct columns of the PDS memory matrix has to be selected by generating appropriate strobes in order that the set of four 16-bit data items can be transferred thereto.

Returning to the four logic conditions displayed in Table 2 for the first row of the PDS memory matrix, SDTRW_ A[0] is true as RS[0] is true. SDTRW_B[0] is also true as NOT (D8 AND RS[0]) is true, whereas SDTRW_C[0] and SDTRW_D[0] are both false.

Thus, in D16 mode, both the first and second columns (corresponding to memory cell groups A and B) are enabled by generating strobes on lines SDTRW_A and SDTRW_B, and the first 16-bit data item is thus written to these two groups of memory cells 36. Simultaneously, the second row is also enabled (i.e. RS[1] is true). The logic conditions associated with the second row of the PDS memory matrix are concurrently evaluated, and so on for the third and fourth rows, allowing four 16-bit data items to be written to the appropriate groups of memory cells. In this case, the second 16-bit data item is written to the third and fourth columns of the PDS memory matrix in the second row, the third 16-bit data item is written to the fifth and sixth columns in the third row, and the fourth 16-bit data item is written to the seventh and eighth columns in the fourth row. This is illustrated by Figure 7b. Subsequently, when the pointer advances into the second group of four word rows, the logic conditions shown in Table 2 are seen to be different, but will result in a similar diagonal of D16 items being written into the matrix. As for the D8 mode, the pattern of connectivity in Table 1 and the logic expressions in Table 2 are repeated every eight rows, and thus the logic conditions are repeated every eight rows. Thus, the cycle will recur for each pair of data transfers in the D16 mode (i.e. four D16 items written per transfer) and for four data transfers in the D32 mode and eight data transfers in D64 mode.

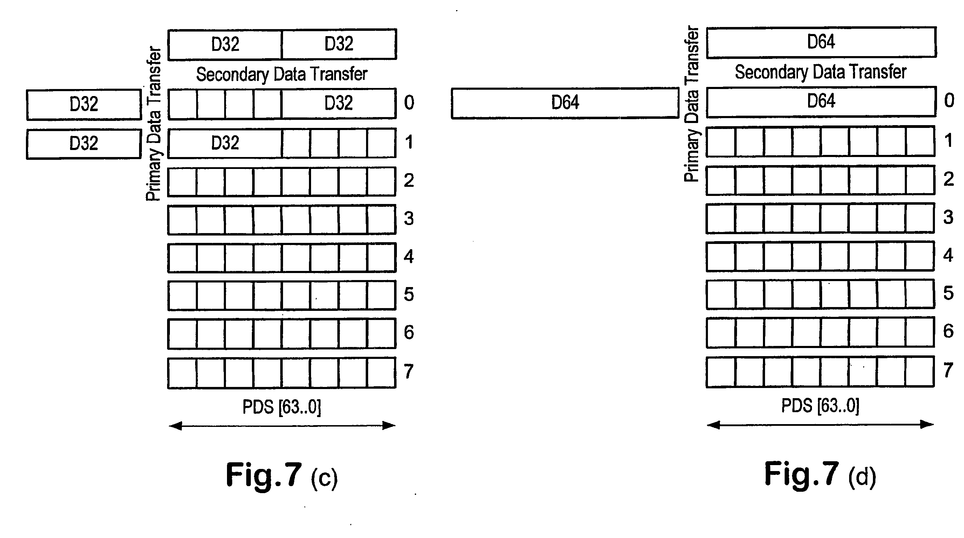

The transfer of data in modes D32 and D64 is carried out in a similar manner, and so will not be described in detail. The transfer of mode D32 data in a single instruction is illustrated in Figure 7c, and the transfer of mode D64 data in a single instruction is illustrated in Figure 7d.

As stated above, the state of the row pointer associated with a group of memory words is used - in conjunction with the mode (i.e. D8, D16 etc.) - to determine whether the data fields in that group of memory words takes part in a data read or a data write operation.

The operation of the memory is symmetric for reads or writes. In other words, the nature of the memory cell 50 in Figure 4 means that data may be written or read from this cell simply by asserting the SDTRW line as explained above. If the memory bit lines (i.e. SDTD and SDTB) are driven in opposition by an appropriate column driver, then a data value will be written to the cell. If the memory bit lines are undriven - typically precharged to an appropriate voltage - then data may be read from the cell by using an appropriate column sense amplifier.

Two methods are provided to initialise the SDT row pointer for both data read and data write operations. The first method comprises loading the SDT row pointer shift register 38 with data from the first tag register TR1 under program control using an instruction issued over the AGbus in Figure 1. The second method comprises executing a SDT pointer initialisation cycle using an instruction issued over the ALbus in Figure 1. In this case the apparatus 10 may be configured as Start of I/O Channel (SOC) so that it automatically responds to an SDT initialisation cycle to the SDT row pointer at or near the head of the PDS memory module. Once this initialisation cycle is complete, the Secondary Data Transfer (SDT) cycles described above may commence.

Although it has been described above that the shift pointer moves iteratively along the rows of the PDS memory matrix, the shift pointer may optionally skip one or more rows if they are found to be faulty and move to the next non-faulty row.

Now the primary transfer of data between the Primary Data Store 16 and the Associative Processor 12 is described. A primary data transfer operation performs data read or write of a bit-column of the Primary Data Store memory matrix. That is, data is transferred between a selected bit of the Primary Data Store data register 40 and a selected bit of the APE data register in a bit-serial manner.

To effect primary data transfers a specific group of bit-column locations of the PDS memory matrix within a selected word row is enabled. In this way, the memory cells 36 in a given column of the memory matrix specified by a selected group (or groups) of memory cells 36 are enabled for data transfer. For primary data transfers all of the columns of the PDS memory matrix take part sequentially in the transfer.

As for secondary data transfer, multiple groups A, B, C and D of Primary Data Store memory cells 36 within the memory matrix are pre-defined, each group of memory cells being defined across multiple rows and columns. These groups A, B, C and D of memory cells 36 are individually addressable via dedicated strobe lines (or connections) which enables data to be read from (or written to) the selected group(s) of memory cells.

The pattern of connectivity for primary data transfer is defined by Table 3 below, the particular groups of memory cells A, B, C and D being hard-wired to the column enable line PDTEN of the appropriate memory bit cells 50.

| row address MOD 8 | bit column address | | | | | | | |
|---|---|---|---|---|---|---|---|---|
| | [63..56] | [56..48] | [47..40] | [39..32] | [31..24] | [23..16] | [15..8] | [7..0] |
| 0 | D | D | D | D | C | C | B | A |
| 1 | C | C | C | C | B | B | A | D |
| 2 | D | D | B | B | C | A | C | C |
| 3 | B | B | C | C | A | D | D | D |
| 4 | D | D | D | A | C | C | B | B |
| 5 | C | C | A | C | B | B | D | D |
| 6 | D | A | B | B | C | C | C | C |
| 7 | A | B | C | C | D | D | D | D |

**Table 3**

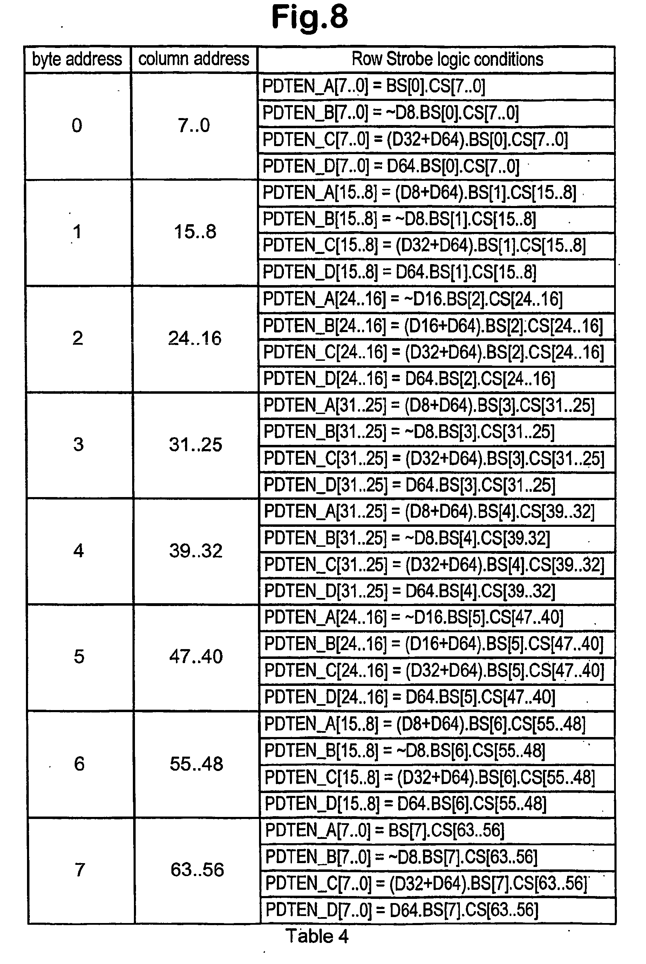

A table (Table 4) of logic conditions given in Figure 8 is used to determine the level of the strobe, which in turn determines whether or not a particular group A, B, C or D of memory cells is enabled for data transfer. Looking at Table 4, each column bit of the PDS memory matrix has associated therewith four logic conditions PDTEN_A, PDTEN_B, PDTEN_C and PDTEN_D which are evaluated to determine which group A, B, C or D of memory cells 36 is to be enabled in a particular column. The logic conditions depend on the condition of a Byte Select variable BS[n] (where n=0 to 8), the condition of the column select of the currently selected column, and the data transfer mode.

The condition of BS[n] is determined by the following equations:

$$1.\quad BS[0] = {\sim}A5.{\sim}A4.{\sim}A3.D64 + {\sim}A4.{\sim}A3.D32 + {\sim}A3.D16 + D8;$$

$$2.\quad BS[1] = {\sim}A5.{\sim}A4.A3.D64 + {\sim}A4.A3.D32 + A3.D16 + D8;$$

$$3.\quad BS[2] = {\sim}A5.A4.{\sim}A3.D64 + A4.{\sim}A3.D32 + {\sim}A3.D16 + D8;$$

$$4.\quad BS[3] = {\sim}A5.A4.A3.D64 + A4.{\sim}A3.D32 + A3.D16 + D8;$$

$$5.\quad BS[4] = A5.{\sim}A4.{\sim}A3.D64 + {\sim}A4.{\sim}A3.D32 + {\sim}A3.D16 + D8;$$

$$6.\quad BS[5] = A5.{\sim}A4.A3.D64 + {\sim}A4.A3.D32 + A3.D16 + D8;$$

$$7.\quad BS[6] = A5.A4.{\sim}A3.D64 + A4.{\sim}A3.D32 + {\text{-}}A3.D16 + D8;$$

$$8.\quad BS[7] = A5.A4.A3.D64 + A4.{\sim}A3.D32 + A3.D16 + D8;$$

where A5, A4 and A3 represent the corresponding bits of the column address, and where the particular bit column address within the given byte field CS[n] are the lower three bits of the column address (i.e. A2, A1 and A0). The column addresses are provided via the AGbus 22 in Figure 1 from some appropriate column address counter or similar.

In contrast to the secondary transfer of data, primary data transfer involves the transfer of individual bits of data, and thus the logic conditions in Table 4 need to be evaluated for each bit in each of the columns of the PDS memory matrix.

Referring again to Figure 7a, consider the transfer of the eight 8-bit data items from the Primary Data Store 16 such that D8 is true, and D16, D32 and D64 are all false. The first bit column of each byte field of the PDS memory matrix is enabled using the PDT column select 48, thus CS[0], CS[8], CS[16] etc. is true and the other columns in the PDS memory matrix are false. Since we are operating in D8 mode, the logic condition for BS[0] through BS[7] is found to be true. Referring again to Table 4 we find that PDTEN_A is true in every column where CS is true (i.e. column 0, 8, 16 etc) thereby enabling the correspond bit of every memory cell group A in the PDS memory matrix.

Similarly, the logic conditions PDTEN_B, PDTEN_C and PDTEN_D in Table 4 which are associated with the first column of the PDS memory matrix are evaluated (again, for every bit in the first column) and are all found to be false. Thus, data from the selected columns of all memory cell groups A is transferred to the corresponding APEs (via the PDT load data register 42).

Although reference is made to 8 items and all Figures and Tables are similarly constrained, it is important to note that the entire PDS memory participates in this operation, transferring the selected bits of all group A fields throughout the store.

As can be seen from Figure 7a and Table 3 above, each of the eight 8-bit data items is moved, sequentially, from its current location on the diagonal of the PDS memory matrix into a respective APE 34.

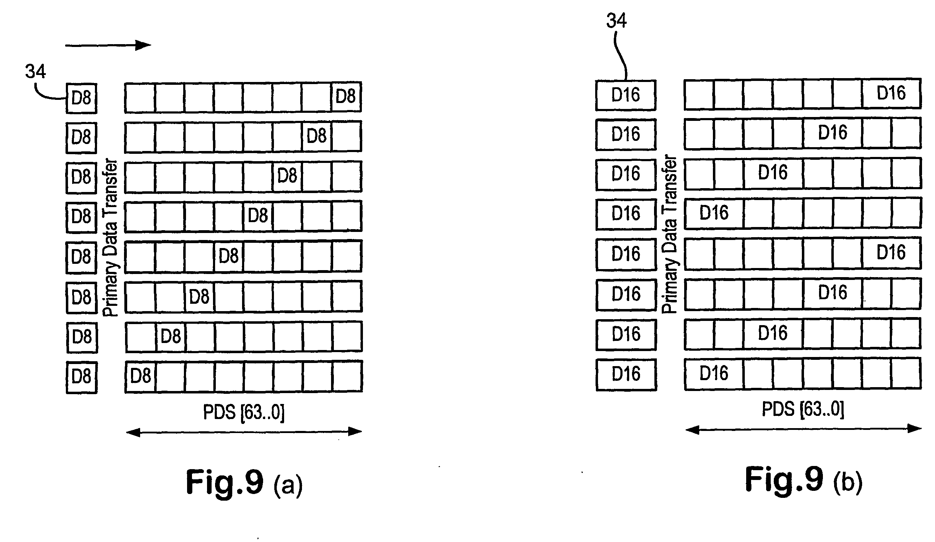

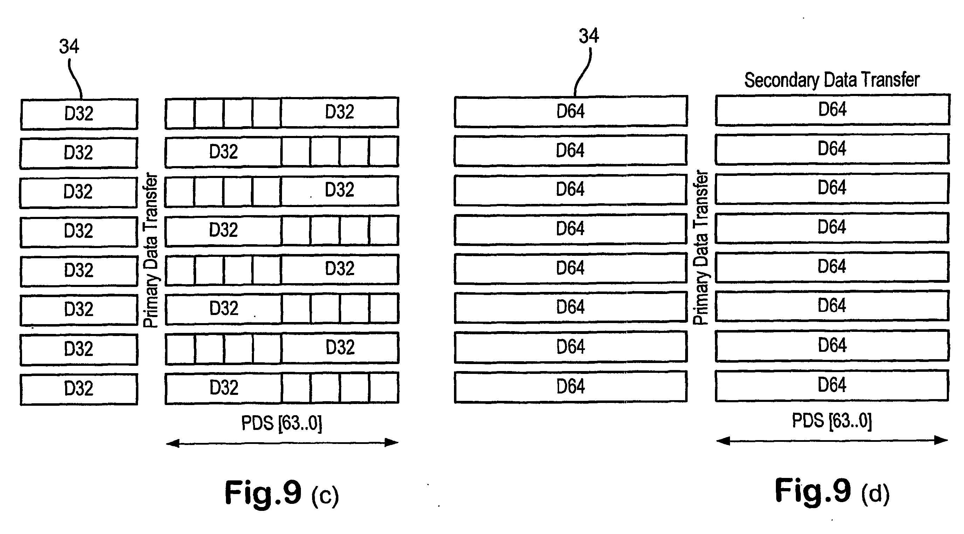

For the primary transfer of data in D16, D32 and D64 modes, the same process as described above is carried out. That is, the logic conditions in Table 4 are evaluated for each column of the PDS memory matrix, and data is transferred between the Primary Data Store 16 and the APEs 34 simultaneously. This is illustrated in Figures 9a to 9d for D8, D16, D32 and D64 modes, respectively. Figure 9 unlike Figure 7, shows the data transfer over multiple clock cycles such that the most efficient use of the PDS can be obtained. In particular, the fact that the PDT and SDTs are data mode sensitive means that otherwise redundant parts of the matrix can be utilised thereby increasing throughput and efficiency.

Finally, the corner-turning function implemented by the Primary Data Store 16 can be seen in Figures 7a and 7d whereby data input to the Primary Data Store 16 as a sequence of bit-parallel word-serial data transfers (secondary data transfer) are converted to data output to the associative processor in a bit-serial, word-parallel fashion (primary data transfer).

Having described particular preferred embodiments of the present invention, it is to be appreciated that the embodiments in question are exemplary only and that variations and modifications such as will occur to those possessed of the appropriate knowledge and skills may be made without departure from the scope of the invention as set forth in the appended claims. For example, although only eight APEs are described herein, in practice many more APEs would be used , limited only by the degree of integration of the product and the number of devices cascaded together and operating concurrently. For example an existing implementation has 4096 APEs in a single device and chips with many more APEs are envisaged. Similarly, the Primary Data Store 16 would comprise a matching row count and a column count suited to the application requirement and sensible constraints of the width of the ALbus data bus (e.g. 32-bit to 128-bit are reasonable).

### Claims

1. A multi-ported orthogonal data memory (16) for effecting a corner-turning function, where data input as a sequence of bit-parallel word-serial data transfers are converted to data output in a bit-serial, word-parallel fashion; the memory (16) being arranged to transfer data words comprising a plurality of data items and comprising a plurality of data memory cells (36) arranged in the form of a matrix having rows and columns,
**characterised in that**
the memory further comprises a plurality of groups (A, B, C, D) of memory cells (36) within the matrix, each group being defined across multiple rows and columns, each group relating to a different size of data item and each group being able to be individually enabled to effect transfer of a data word thereto; and
enabling means having dedicated strobe connections (SDTRW, PDTEN) to each of the plurality of groups (A, B, C, D) of memory cells (36) and being arranged to enable a selected one of the plurality of groups (A, B, C, D) of memory cells (36), as determined by the size of the data items being transferred, to read data present at their inputs or to write stored data to their outputs in a single transfer operation, the enabling means being arranged to enable a selected group (A, B, C, D) upon a set of logic conditions becoming true, the logic conditions being determined from a current selected row or column of the matrix and the size of the items being transferred,

the enabling means comprising:

selection means for selecting the current size of the data items in the data word and configuring the enabling means to operate with the selected current size of data items;

byte column determining means for enabling a specific group of byte column locations of the matrix within a selected word row to be enabled for transferring an item of the data word across a word port of the memory, the byte column determining means comprising a table specifying the relationship between the plurality of different groups of memory cells and their respective memory cell locations in the matrix; and

bit column determining means for enabling a specific group of bit column locations of the matrix within a selected word row to be enabled for transferring a bit of an item of the data word across a bit port of the memory, the bit column determining means comprises a table specifying the relationship between the plurality of different groups of memory cells and their respective memory cell locations in the matrix.

2. A memory (16) according to Claim 1, wherein each of the groups (A, B, C, D) of memory cells is specified according to its use in transferring the data items of the data word to or from the matrix to effect the corner-turning function.

3. A memory (16) according to Claim 1 or 2, wherein the number of different groups (A, B, C, D) of memory cells provided within the matrix equals the number of different sizes of data items which can be handled by the memory.

4. A memory (16) according to any preceding claim, wherein each item of the data word being transferred is an integer power-of-two multiple of eight bits.

5. A memory (16) according to any preceding claim, wherein the memory is arranged to operate with 64, 32, 16 and 8-bit data items.

6. A memory (16) according to any preceding claim, wherein the enabling means comprises a pointer in a shift register (38) for determining which rows of the matrix are to be enabled for taking part in the data transfer of all of the data items of the data word.

7. A memory (16) according to Claim 6, wherein the pointer in the shift register (38) is configured to be operable in a plurality of different modes (D8, D16, D32, D64), each mode corresponding to a possible size of the data item being transferred, the pointer being configured within a single instruction to advance by a predetermined number of bit positions as determined by the current mode thereby indicating which rows of the matrix are to be enabled to facilitate transfer of the whole of the data word to or from the matrix.

8. A memory (16) according to Claim 6 or 7, further comprising means for storing information relating to a faulty row in the matrix and wherein the shifting word pointer register (38) is arranged to be controlled to skip the faulty row in the matrix and instead point to otherwise redundant additional row of the matrix.

9. A memory (16) according to any of Claims 6 to 8, further comprising means for converting the current position of the row pointer in the shift register (38) to one or more row select logic signals.

10. A memory (16) according to Claim 9, further comprising a hard-wired backward propagation network for determining, from the bit position of the pointer and the size of the current data items, the rows of the matrix that are to be enabled for data transfer.

11. A memory (16) according to any preceding claim, wherein the locations of the memory cells of each group form a repeating pattern when viewed as a matrix.

12. A memory (16) according to any preceding claim, further comprising a load register (42) arranged to retain temporarily bit-serial word parallel data transferred to and from the matrix of memory cells (36) across a bit port of the memory.

13. A memory (16) according to any preceding claim, further comprising a first masking register (44) arranged to mask bits of the data to be read out of the matrix of memory cells (36) via a bit port of the memory.

14. A memory (16) according to any preceding claim, further comprising a second masking register (46) arranged to mask bits of the data to be input to the matrix of memory cells via a bit port of the memory.

**15.** A multi-ported orthogonal data memory (16) according to Claim 1, wherein the data corner-turning function is effected between a plurality of SIMD associative processors and a location addressable data store, the memory (16) being arranged to transfer the data words across a word port for the data store and transfer data bits across a bit port for the SIMD associative processors, and the enabling means is arranged to transfer data items via the word port or bit data via the bit port in a single transfer operation.

**16.** A system comprising a combination of a memory (16) as defined in any preceding claim and a plurality of SIMD associative processors (12).

**Patentansprüche**

**1.** Orthogonaler Datenspeicher (16) mit mehreren Ports zum Bewirken einer Corner-Turning-Funktion, wo als eine Sequenz von bitparallelen, wortseriellen Datentransfers eingegebene Daten in auf bitserielle, wortparallele Weise ausgegebene Daten konvertiert werden; wobei der Speicher (16) dafür ausgelegt ist, Datenwörter, die mehrere Datenelemente umfassen, zu transferieren, und mehrere Datenspeicherzellen (36) umfasst, die in der Form einer Matrix mit Zeilen und Spalten angeordnet sind,
**dadurch gekennzeichnet, dass**
der Speicher weiter mehrere Gruppen (A, B, C, D) von Speicherzellen (36) in der Matrix umfasst, wobei jede Gruppe über mehrere Reihen und Spalten definiert ist, wobei jede Gruppe sich auf eine andere Größe von Datenelement bezieht und jede Gruppe in der Lage ist, individuell freigegeben zu werden, um einen Transfer eines Datenworts dorthin zu bewirken; und
Freigabemittel, die eigene Strobe-Verbindungen (SDTRW, PDTEN) zu jeder der mehreren Gruppen (A, B, C, D) von Speicherzellen (36) aufweisen und dafür ausgelegt sind, eine ausgewählte der mehreren Gruppen (A, B, C, D) von Speicherzellen (36) freizugeben, nach Bestimmung durch die Größe der transferierten Datenelemente, um an ihren Eingängen anliegende Daten zu lesen oder um gespeicherte Daten an ihren Ausgängen in einer einzigen Transferoperation zu schreiben, wobei die Freigabemittel dafür ausgelegt sind, eine ausgewählte Gruppe (A, B, C, D) freizugeben, wenn eine Menge von Logikbedingungen wahr wird, wobei die Logikbedingungen anhand einer aktuellen ausgewählten Reihe oder Spalte der Matrix und der Größe der transferierten Elemente bestimmt werden, wobei die Freigabemittel Folgendes umfassen:

Auswahlmittel zum Auswählen der aktuellen Größe der Datenelemente in dem Datenwort und Konfigurieren der Freigabemittel zum Arbeiten mit der ausgewählten aktuellen Größe von Datenelementen;
Byte-Spalten-Bestimmungsmittel zum Freigeben, dass eine spezifische Gruppe von Byte-Spalten-Orten der Matrix in einer ausgewählten Wortreihe freigegeben wird zum Transferieren eines Elements des Datenworts über einen Wortport des Speichers, wobei das Byte-Spalten-Bestimmungsmittel eine Tabelle umfasst, die die Beziehung zwischen den mehreren verschiedenen Gruppen von Speicherzellen und ihren jeweiligen Speicherzellenorten in der Matrix spezifiziert; und
Bit-Spalten-Bestimmungsmittel zum Ermöglichen, dass eine spezifische Gruppe von Bit-Spalten-Orten der Matrix in einer ausgewählten Wortreihe freigegeben wird zum Transferieren eines Bit eines Elements des Datenworts über einen Bitport des Speichers, wobei das Bit-Spalten-Bestimmungsmittel eine Tabelle umfasst, die die Beziehung zwischen den mehreren verschiedenen Gruppen von Speicherzellen und ihren jeweiligen Speicherzellenorten in der Matrix spezifiziert.

**2.** Speicher (16) nach Anspruch 1, wobei jede der Gruppen (A, B, C, D) von Speicherzellen gemäß ihrer Verwendung beim Transferieren der Datenelemente des Datenworts zu oder von der Matrix spezifiziert ist, um die Corner-Turning-Funktion zu bewirken.

**3.** Speicher (16) nach Anspruch 1 oder 2, wobei die Anzahl von verschiedenen Gruppen (A, B, C, D) von Speicherzellen, die in der Matrix vorgesehen sind, gleich der Anzahl von unterschiedlichen Größen von Datenelementen ist, die von dem Speicher gehandhabt werden können.

**4.** Speicher (16) nach einem vorhergehenden Anspruch, wobei jedes Element des Datenworts, das transferiert wird, ein ganzzahliges Zweier-Potenz-Vielfaches von acht Bits ist.

**5.** Speicher (16) nach einem vorhergehenden Anspruch, wobei der Speicher dafür ausgelegt ist, mit 64-, 32-, 16- und 8-Bit-Datenelementen zu arbeiten.

**6.** Speicher (16) nach einem vorhergehenden Anspruch, wobei das Freigabemittel einen Zeiger in einem Schieberegister (38) umfasst zum Bestimmen, welche Reihen der Matrix freigegeben werden sollen, um an dem Datentransfer aller Datenelemente des Datenworts teilzunehmen.

**7.** Speicher (16) nach Anspruch 6, wobei der Zeiger in dem Schieberegister (38) konfiguriert ist, in mehreren unterschiedlichen Modi (D8, D16, D32, D64) arbeiten zu können, wobei jeder Modus einer entsprechenden Größe des transferierten Datenelements entspricht, wobei der Zeiger in einer einzelnen Anweisung konfiguriert wird, sich um eine vorbestimmte Anzahl von Bitpositionen vorzubewegen, wie durch den aktuellen Modus bestimmt, um **dadurch** anzuzeigen, welche Reihen der Matrix freigegeben werden sollen, um einen Transfer des ganzen Datenworts zu oder von der Matrix zu erleichtern.

**8.** Speicher (16) nach Anspruch 6 oder 7, weiterhin umfassend Mittel zum Speichern von Informationen hinsichtlich einer fehlerhaften Reihe in der Matrix und wobei das verschiebende Wortzeigerregister (38) so ausgelegt ist, dass es gesteuert wird, die fehlerhafte Reihe in der Matrix zu überspringen und stattdessen auf eine ansonsten redundante zusätzliche Reihe der Matrix zu zeigen.

**9.** Speicher (16) nach einem der Ansprüche 6 bis 8, weiterhin umfassend Mittel zum Konvertieren der aktuellen Position des Zeilenzeigers in dem Schieberegister (38) in ein oder mehrere Reihenauswahllogiksignale.

**10.** Speicher (16) nach Anspruch 9, weiterhin umfassend ein festverdrahtetes Backward-Propagation-Netzwerk, um anhand der Bitposition des Zeigers und der Größe der aktuellen Datenelemente die Reihen der Matrix zu bestimmen, die für den Datentransfer freigegeben werden sollen.

**11.** Speicher (16) nach einem vorhergehenden Anspruch, wobei die Orte der Speicherzellen jeder Gruppe bei Betrachtung als eine Matrix ein sich wiederholendes Muster bilden.

**12.** Speicher (16) nach einem vorhergehenden Anspruch, weiterhin umfassend ein Lastregister (42), das dafür ausgelegt ist bitserielle, wortparallele Daten, über einen Bitport des Speichers zu und von der Matrix von Speicherzellen (36) transferiert, vorübergehend festzuhalten.

**13.** Speicher (16) nach einem vorhergehenden Anspruch, weiterhin umfassend ein erstes Maskierungsregister (44), das dafür ausgelegt ist, Bits der Daten zu maskieren, die über einen Bitport des Speichers aus der Matrix von Speicherzellen (36) ausgelesen werden sollen.

**14.** Speicher (16) nach einem vorhergehenden Anspruch, weiterhin umfassend ein zweites Maskierungsregister (46), das dafür ausgelegt ist, Bits der Daten zu maskieren, die über einen Bitport des Speichers in die Matrix von Speicherzellen eingegeben werden sollen.

**15.** Orthogonaler Datenspeicher (16) nach Anspruch 1 mit mehreren Ports, wobei die Daten-Corner-Turning-Funktion zwischen mehreren SIMD-assoziativen Prozessoren und einem ortsadressierbaren Datenspeicher bewirkt wird, wobei der Speicher (16) so ausgelegt ist, dass er die Datenwörter über einen Wortport für den Datenspeicher transferiert und Datenbits über einen Bitport für die SIMD-assoziativen Prozessoren transferiert, und das Freigabemittel dafür ausgelegt ist, in einer einzigen Transferoperation Datenelemente über den Wortport oder Bitdaten über den Bitport zu transferieren.

**16.** System umfassend eine Kombination aus einem Speicher (16) wie in einem vorhergehenden Anspruch definiert und mehrere SIMD-assoziative Prozessoren (12).

## Revendications

**1.** Mémoire de données orthogonales à plusieurs ports (16) conçue pour mettre en oeuvre une fonction de retournement, dans laquelle les données entrées en tant que séquence de transferts de données en série par mot et parallèle par bit sont converties en données produites en série par bit et parallèle par mot. La mémoire (16) décrite dans cette invention est conçue pour transférer des mots de données comprenant plusieurs éléments de données et cette mémoire comprend: plusieurs cellules de mémoire de données (36) disposées sous forme de matrice constituée de rangées et de colonnes, **caractérisée en ce que**

la mémoire comprend en outre plusieurs groupes (A, B, C, D) de cellules de mémoire (36) dans la matrice; chaque groupe étant défini par plusieurs rangées et par plusieurs colonnes, chaque groupe en fonction d'une taille différente d'élément de données et chaque groupe étant capable d'être exécuté individuellement pour qu'ils effectuent le transfert d'un mot de données; et

des moyens d'exécution dotés de connexions d'échantillonnage dédiées (SDTRW, PDTEN) à chacun des multiples groupes (A, B, C, D) de cellules de mémoire (36), et étant disposés pour exécuter l'un des multiples groupes (A, B, C, D) de cellules de mémoire (36), comme déterminés par la taille des éléments de données transférés, conçus pour lire les données se trouvant à leurs entrées ou pour enregistrer les données stockées sur leurs sorties par une unique opération de transfert, les moyens d'exécution étant disposés pour exécuter un groupe choisi (A, B, C, D) sur un ensemble de conditions logiques devenant vraies, les conditions logiques étant déterminées à partir d'une ligne ou d'une colonne actuelle choisie de la matrice et à partir de la taille des éléments étant transférés, les moyens d'exécution comprenant:

des moyens de sélection conçus pour la sélection de la taille actuelle des éléments de données dans le mot de données et pour la configuration des moyens de sélection afin de fonctionner avec la taille actuelle choisie des éléments de données;

des moyens de détermination d'une colonne d'octets conçus pour permettre à un groupe spécifique d'emplacements de la colonne d'octets de la matrice, dans une ligne de mots choisie pour être exécutée pour le transfert d'un élément du mot de données par un port de mots de la mémoire, la colonne d'octets déterminant des moyens comprenant une table qui spécifie la relation entre les différents groupes de cellules de mémoire et leurs emplacements respectifs dans la matrice; et

des moyens de détermination de la colonne de bits conçus pour permettre à un groupe spécifique d'emplacements de la colonne de bits de la matrice, dans une ligne de mots choisie pour être exécutée pour le transfert d'un bit d'un élément du mot de données par un port de bits de la mémoire, les moyens de détermination de la colonne de bits comprenant une table qui spécifie la relation entre les différents groupes de cellules de mémoire et leurs emplacements respectifs dans la matrice.

2. Mémoire (16) selon la revendication 1, dans laquelle chacun des groupes (A, B, C, D) de cellules de mémoire est spécifié en fonction de son utilisation dans le transfert d'éléments de données du mot de données depuis ou vers la matrice, afin de mettre en oeuvre la fonction de retournement.

3. Mémoire (16) selon la revendication 1 ou la revendication 2, dans laquelle le nombre de groupes différents (A, B, C, D) de cellules de mémoire fournis dans la matrice est égal au nombre de tailles différentes d'éléments de données qui peuvent être traités par la mémoire.

4. Mémoire (16) selon l'une quelconque des revendications précédentes, dans laquelle chaque élément de mot de données étant transféré est le multiple de huit bits par deux élevé à la puissance d'un entier.

5. Mémoire (16) selon l'une quelconque des revendications précédentes, dans laquelle la mémoire est disposée pour traiter des éléments de données de 64, 32, 16 et 8 bits.

6. Mémoire (16) selon l'une quelconque des revendications précédentes, dans laquelle les moyens d'exécution comprennent un pointeur dans un registre à décalage (38) afin de déterminer quelles lignes de la matrice doivent être exécutées pour prendre part au transfert de données de l'ensemble des éléments de données du mot de données.

7. Mémoire (16) selon la revendication 6, dans laquelle le pointeur dans le registre à décalage (38) est configuré pour être opérable dans de multiples modes différents (D8, D16, D32, D64), chaque mode correspondant à une taille possible de l'élément de données étant transféré, le pointeur étant configuré dans une unique instruction pour avancer d'un nombre prédéterminé de positions de bit, comme déterminé par le mode actuel qui indique ainsi quelles lignes de la matrice doivent être exécutées, afin de faciliter le transfert de l'ensemble du mot de données depuis ou vers la matrice.

8. Mémoire (16) selon la revendication 6 ou la revendication 7, comprenant en outre des moyens de stockage de l'information relative à une ligne erronée dans la matrice et dans laquelle le pointeur sur le mot du registre à décalage (38) est disposé pour être contrôlé afin de sauter la ligne erronée dans la matrice et de pointer à la place sur une ligne supplémentaire autrement redondante de la matrice.

9. Mémoire (16) selon l'une quelconque des revendications 6 à 8, comprenant en outre des moyens de conversion de la position actuelle du pointeur de ligne dans le registre à décalage (38) en un ou plusieurs signaux logiques de sélection de ligne.

10. Mémoire (16) selon la revendication 9, comprenant en outre un réseau de propagation arrière câblé conçu pour la détermination, à partir de la position en bits du pointeur et de la taille des éléments de données en cours de traitement, des lignes de la matrice qui doivent être exécutées pour le transfert de données.

11. Mémoire (16) selon l'une quelconque des revendications précédentes, dans laquelle les emplacements des cellules de mémoire de chaque groupe forment un motif répétitif lorsqu'ils sont vus en tant que matrice.

12. Mémoire (16) selon l'une quelconque des revendications précédentes, comprenant en outre un registre de chargement (42) disposé pour retenir temporairement des données de mot parallèle par série de bits transférées depuis ou vers la matrice de cellules de mémoire (36) par un port de bits de la mémoire.

13. Mémoire (16) selon l'une quelconque des revendications précédentes, comprenant en outre un premier registre de masquage (44) disposé pour masquer des bits de données qui doivent être lues à partir de la matrice de cellules de mémoire (36) par le biais d'un port de bits de la mémoire.

14. Mémoire (16) selon l'une quelconque des revendications précédentes, comprenant en outre un seconde registre de masquage (46) disposé pour masquer des bits de données qui doivent être entrées dans la matrice de cellules de mémoire par le biais d'un port de bits de la mémoire.

15. Mémoire de données orthogonales à plusieurs ports (16) selon la revendication 1, dans laquelle la fonction de retournement de données est mise en oeuvre entre de multiples processeurs associatifs SIMD et un magasin de données à emplacements adressables, la mémoire (16) étant disposée pour transférer les mots de données par un port de mots pour le magasin de données, et pour transférer les bits de données par un port de bits pour les processeurs associatifs SIMD, les moyens d'exécution sont de plus disposés pour transférer des éléments de données par le biais du port de mots ou des données en bits par le biais du port de bits, dans une unique opération de transfert.

16. Système comprenant l'association d'une mémoire (16) comme définie selon l'une quelconque des revendications précédentes et de multiples processeurs SIMD associatifs (12).

**Fig.1**

# Fig.2

| D32 | | D32 | |
|---|---|---|---|
| D16 | D16 | D16 | D16 |
| D8 D8 D8 D8 | | D8 D8 D8 D8 | |

Output

| D32 | | D32 | |
|---|---|---|---|
| D16 | D16 | D16 | D16 |
| D16 | D16 | D16 | D16 |
| D8 D8 D8 D8 | | D8 D8 D8 D8 | |

Input

serial

Bit Mask Logic

ICC

sync | asycn

TR1,
TR2,
TR3

AR1
AR2

Bit Mask
Logic

| D64 | | | |
|---|---|---|---|
| D32 | | D32 | |
| D16 | D16 | D16 | D16 |
| D8 D8 D8 D8 | | D8 D8 D8 D8 | |

30    32

34

0

4K

CAM [191:64]    26    CAM [63:0]    24

28    AB [7:0]

PDS [63:0]

14    12    16

EP 1 733 300 B1

**Fig.3**

PDS[63..0]

16

SDT INPUT / OUTPUT FIELDS

| D64 | | | | | | | |
|---|---|---|---|---|---|---|---|
| D32 | | | | D32 | | | |
| D16 | | D16 | | D16 | | D16 | |
| D8 | D8 | D8 | D8 | D8 | D8 | D8 | D8 |

64

64

46    44    42                                    40

2    2    1                                    PCI

38

PDT DUMP DATA & MASK

PDT DUMP DATA & MASK

PDT LOAD DATA

SDT ROW POINTER SHIFT REGISTER

alBus Interface 20

2    2    1

PDT DUMP MASKING LOGIC

PDT LOAD MASKING LOGIC

PDT LOAD REGISTER

PDT COLUMN SELECTS

36

PCO

PDT COLUMN DECODER

PDT COLUMN ADDRESS

8

48

EP 1 733 300 B1

# Fig.4

# Fig.5

| row address MOD 8 | Row Strobe logic conditions |
|---|---|
| 0 | SDTRW_A[0] = RS[0] |
| | SDTRW_B[0] = ~D8.RS[0] |
| | SDTRW_C[0] = (D32+D64).RS[0] |
| | SDTRW_D[0] = D64.RS[0] |
| 1 | SDTRW_A[1] = (D8+D64).RS[1] |
| | SDTRW_B[1] = (D16+D64).RS[1] |
| | SDTRW_C[1] = (D32+D64).RS[1] |
| | SDTRW_D[1] = D64.RS[1] |
| 2 | SDTRW_A[2] = ~D16.RS[2] |
| | SDTRW_B[2] = (D16+D64).RS[2] |
| | SDTRW_C[2] = (D32+D64).RS[2] |
| | SDTRW_D[2] = D64.RS[2] |
| 3 | SDTRW_A[3] = (D8+D64).RS[3] |
| | SDTRW_B[3] = ~D8.RS[3] |
| | SDTRW_C[3] = (D32+D64).RS[3] |
| | SDTRW_D[3] = D64.RS[3] |
| 4 | SDTRW_A[4] = (D8+D64).RS[4] |
| | SDTRW_B[4] = ~D8.RS[4] |
| | SDTRW_C[4] = (D32+D64).RS[4] |
| | SDTRW_D[4] = D64.RS[4] |
| 5 | SDTRW_A[5] = ~D16.RS[5] |
| | SDTRW_B[5] = (D16+D64).RS[5] |
| | SDTRW_C[5] = (D32+D64).RS[5] |
| | SDTRW_D[5] = D64.RS[5] |
| 6 | SDTRW_A[6] = (D8+D64).RS[6] |
| | SDTRW_B[6] = (D16+D64).RS[6] |
| | SDTRW_C[6] = (D32+D64).RS[6] |
| | SDTRW_D[6] = D64.RS[6] |
| 7 | SDTRW_A[7] = RS[7] |
| | SDTRW_B[7] = ~D8.RS[7] |
| | SDTRW_C[7] = (D32+D64).RS[7] |
| | SDTRW_D[7] = D64.RS[7] |

Table 2

## Fig.6

58

56

SDT ROW POINTER SHIFT REGISTER

BIT[0] — D8 / D16 / D32 / D64 → RS[0]

BIT[1] — D8 / D16 / D32 / D64 → RS[1]

BIT[2] — D8 / D16 / D32 / D64 → RS[2]

BIT[3] — D8 / D16 / D32 / D64 → RS[3]

BIT[4] — D8 / D16 / D32 / D64 → RS[4]

BIT[5] — D8 / D16 / D32 / D64 → RS[5]

BIT[6] — D8 / D16 / D32 / D64 → RS[6]

BIT[7] — D8 / D16 / D32 / D64 → RS[7]

**Fig.7** (a)

**Fig.7** (b)

**Fig.7 (d)**

Secondary Data Transfer

Primary Data Transfer

D64

D64

D64

PDS [63..0]

0 1 2 3 4 5 6 7

**Fig.7 (c)**

Secondary Data Transfer

Primary Data Transfer

D32

D32

D32

D32

D32

D32

PDS [63..0]

0 1 2 3 4 5 6 7

# Fig.8

| byte address | column address | Row Strobe logic conditions |
|---|---|---|
| 0 | 7..0 | PDTEN_A[7..0] = BS[0].CS[7..0] |
| | | PDTEN_B[7..0] = ~D8.BS[0].CS[7..0] |
| | | PDTEN_C[7..0] = (D32+D64).BS[0].CS[7..0] |
| | | PDTEN_D[7..0] = D64.BS[0].CS[7..0] |
| 1 | 15..8 | PDTEN_A[15..8] = (D8+D64).BS[1].CS[15..8] |
| | | PDTEN_B[15..8] = ~D8.BS[1].CS[15..8] |
| | | PDTEN_C[15..8] = (D32+D64).BS[1].CS[15..8] |
| | | PDTEN_D[15..8] = D64.BS[1].CS[15..8] |
| 2 | 24..16 | PDTEN_A[24..16] = ~D16.BS[2].CS[24..16] |
| | | PDTEN_B[24..16] = (D16+D64).BS[2].CS[24..16] |
| | | PDTEN_C[24..16] = (D32+D64).BS[2].CS[24..16] |
| | | PDTEN_D[24..16] = D64.BS[2].CS[24..16] |
| 3 | 31..25 | PDTEN_A[31..25] = (D8+D64).BS[3].CS[31..25] |
| | | PDTEN_B[31..25] = ~D8.BS[3].CS[31..25] |
| | | PDTEN_C[31..25] = (D32+D64).BS[3].CS[31..25] |
| | | PDTEN_D[31..25] = D64.BS[3].CS[31..25] |
| 4 | 39..32 | PDTEN_A[31..25] = (D8+D64).BS[4].CS[39..32] |
| | | PDTEN_B[31..25] = ~D8.BS[4].CS[39.32] |
| | | PDTEN_C[31..25] = (D32+D64).BS[4].CS[39..32] |
| | | PDTEN_D[31..25] = D64.BS[4].CS[39..32] |
| 5 | 47..40 | PDTEN_A[24..16] = ~D16.BS[5].CS[47..40] |
| | | PDTEN_B[24..16] = (D16+D64).BS[5].CS[47..40] |
| | | PDTEN_C[24..16] = (D32+D64).BS[5].CS[47..40] |
| | | PDTEN_D[24..16] = D64.BS[5].CS[47..40] |
| 6 | 55..48 | PDTEN_A[15..8] = (D8+D64).BS[6].CS[55..48] |
| | | PDTEN_B[15..8] = ~D8.BS[6].CS[55..48] |
| | | PDTEN_C[15..8] = (D32+D64).BS[6].CS[55..48] |
| | | PDTEN_D[15..8] = D64.BS[6].CS[55..48] |
| 7 | 63..56 | PDTEN_A[7..0] = BS[7].CS[63..56] |
| | | PDTEN_B[7..0] = ~D8.BS[7].CS[63..56] |
| | | PDTEN_C[7..0] = (D32+D64).BS[7].CS[63..56] |
| | | PDTEN_D[7..0] = D64.BS[7].CS[63..56] |

Table 4

34

| D8 |

Primary Data Transfer

| D8 | | | | | | | | | D8 |
| D8 | | | | | | | | D8 | |
| D8 | | | | | | | D8 | | |
| D8 | | | | | | D8 | | | |
| D8 | | | | | D8 | | | | |
| D8 | | | | D8 | | | | | |
| D8 | | | D8 | | | | | | |
| D8 | | D8 | | | | | | | |

PDS [63..0]

**Fig.9** (a)

34

| D16 |

Primary Data Transfer

| D16 | | | | | | | | | D16 |
| D16 | | | | | | | D16 | | |
| D16 | | | | | | D16 | | | |
| D16 | | D16 | | | | | | | |
| D16 | | | | | | | | | D16 |
| D16 | | | | | | | D16 | | |
| D16 | | | | D16 | | | | | |
| D16 | | D16 | | | | | | | |

PDS [63..0]

**Fig.9** (b)

Fig.9 (d)

Fig.9 (c)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02043068 A